# EUROPÄISCHE PATENTSCHRIFT

(11) **EP 1 016 832 B1**
(45) Veröffentlichungstag und Bekanntmachung des Hinweises auf die Patenterteilung: **15.09.2004**
(21) Anmeldenummer: 99811202.3
(22) Anmeldetag: 23.12.1999
(51) Int. Cl.: F24C 15/32, A47J 27/16

(54) **Verfahren und Einrichtung zur Zubereitung von Speisen.**
Method and device for preparing meals
Procédé et appareil de préparation de repas

(30) Priorität: 30.12.1998 CH 258698
(43) Veröffentlichungstag der Anmeldung: 05.07.2000
(73) Patentinhaber: Menu System AG, 9014 St. Gallen (CH)
(72) Erfinder: Wuest, Ernst, 9424 Rheineck (CH)
(74) Vertreter: Kulhavy, Sava, Dipl.-Ing.

(56) Entgegenhaltungen:
- EP-A- 0 650 682
- DE-A- 19 517 824
- FR-A- 2 619 613
- US-A- 5 209 941
- US-A- 5 595 109
- US-A- 5 619 983

## Beschreibung

Die vorliegende Erfindung betrifft ein Verfahren zur Zubereitung von Speisen unter Anwendung von Wasserdampf sowie eine Einrichtung zur Durchführung dieses Verfahrens.

In FR-A-2619 613 ist ein Verfahren dieser Gattung, sowie eine Einrichtung zur Durchführung dieses Verfahrens offenbart und zeigt die Merkmale im Oberbegriff der Ansprüche 1 oder 4. In diesem vorbekannten Verfahren wird Dampf erzeugt, welcher in einem geschlossenen System im Innern des Garraumes zirkuliert. Kondensiertes Wasser wird durch eine Öffnung im Boden des Garraumes in ein Auffangschublade geleitet. Diese Öffnung ist nicht verschliessbar. Der Dampf gelangt somit auch in die Auffangschublade und er gibt Energie an das kondensierte Wasser ab. Dieser zusätzliche Energieverlust führt zu verlängerten Garzeiten.

In der EP-A-0436703 ist ein weiteres Verfahren dieser Gattung sowie ein weiterer Ofen zur Durchführung dieses Verfahrens offenbart. In diesem vorbekannten Verfahren werden explosionsartige Dampfstösse im luftdicht verschlossenen Innenraum des Ofens erzeugt. Diese Dampfstösse verursachen einen verhältnismässig hohen Druck im Inneren des Ofengehäuses. Dieser Druck beansprucht mechanisch das Gehäuse des Ofens, und zwar vor allem eine Dichtung im Bereich der Türöffnung im Gehäuse, eine Dichtung an der Welle eines Ventilators, Türscharniere und den Verschlussmechanismus der Ofentür. Ausserdem ist Druckdampf bei diesem vorbekannten Verfahren im Garraum vorhanden. Wenn der Ofen beispielsweise in einem Flugzeug angeordnet ist und wenn die Ofentür geöffnet wird, dann entweicht eine grosse Menge von Dampf in das Innere des Flugzeuges. Das Innere des Flugzeuges ist gegenüber aussen luftdicht abgeschlossen, sodass der entwichene Dampfanteil unter diesen Umständen an der Innenseite der Flugzeugwand und an der Innenseite der Flugzeugfenster kondensiert, was vermieden werden soll.

Es kann vorkommen, dass bei grosser Menge von Gargut Dampf im Inneren des Ofens kondensiert und dass sich als Folge davon Wasserlachen auf dem Boden des Ofens bilden. Beim Oeffnen der Ofentür kann dieses Kondenswasser in das Innere des Flugzeuges abfliessen. In einem Flugzeug, welches nicht mit der modernster Technik ausgerüstet ist, ist es praktisch unmöglich, den Ofen an eine Abwasserleitung anzuschliessen. Folglich fliesst das Kondenswasser auf den Boden des Flugzeuges, was ebenfalls unerwünscht ist.

Die Aufgabe der vorliegenden Erfindung ist, diese sowie noch weitere Nachteile des Standes der Technik zu beseitigen.

Diese Aufgabe wird beim Verfahren der eingangs genannten Gattung erfindungsgemäss so gelöst, wie dies im kennzeichnenden Teil des Patentanspruchs 1 definiert ist.

Die genannte Aufgabe wird bei einer Einrichtung zur Durchführung des Verfahrens erfindungsgemäss so gelöst, wie dies im kennzeichnenden Teil des Patentanspruchs 4 definiert ist.

Nachstehend werden Ausführungsbeispiele für das vorliegende Verfahren sowie für die vorliegende Einrichtung anhand der beiliegenden Zeichnungen näher erläutert. Es zeigt:
Fig. 1 schematisch und in einem Vertikalschnitt eine erste Ausführung der Einrichtung zur Durchführung des vorliegenden Verfahrens, wobei diese Einrichtung einen Dampfkondensator aufweist,
Fig. 2 in einer explosionsartigen Darstellung den Dampfkondensator aus Fig. 1,
Fig. 3 in einer explosionsartigen Darstellung ein Sicherheitsventil der Einrichtung aus Fig. 1,
Fig. 4 schematisch und in einem Vertikalschnitt eine zweite Ausführung der Einrichtung zur Durchführung des vorliegenden Verfahrens,
Fig. 5 schematisch und in einem Vertikalschnitt eine dritte Ausführung der Einrichtung zur Durchführung des vorliegenden Verfahrens,
Fig. 6 schematisch und in einem Vertikalschnitt eine vierte Ausführung der Einrichtung zur Durchführung des vorliegenden Verfahrens,
Fig. 7 schematisch und in einem Vertikalschnitt eine fünfte Ausführung der Einrichtung zur Durchführung des vorliegenden Verfahrens und
Fig. 8 in einer explosionsartigen Darstellung einen Ventilator sowie eine diesem zugeordnete Heizvorrichtung.

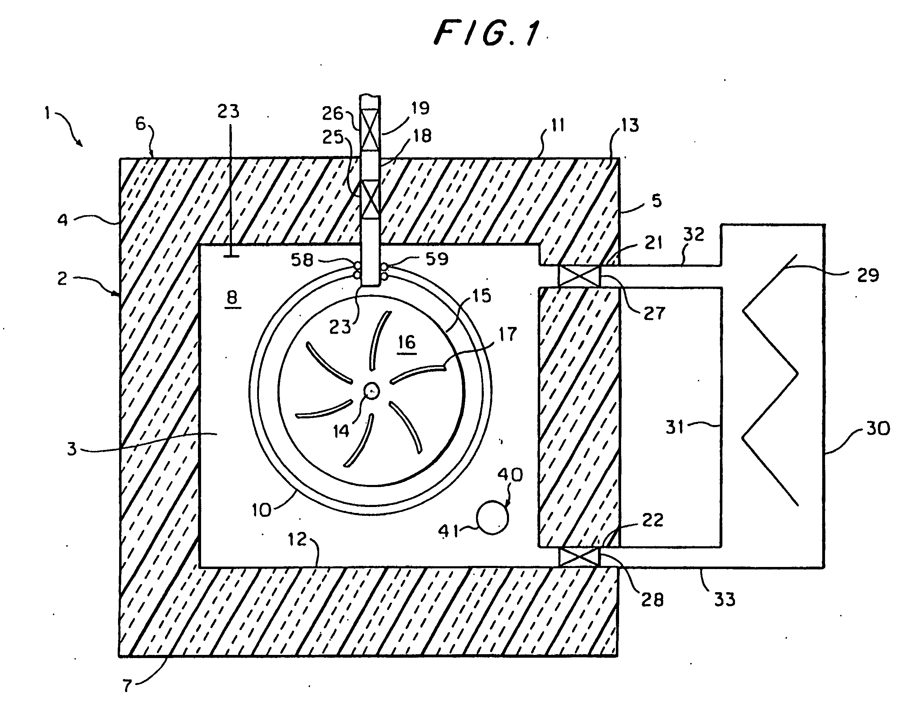

Die in Fig. 1 in einem vertikalen Schnitt dargestellte Einrichtung zur Zubereitung von Speisen umfasst einen Ofen 1. Dieser Ofen 1 kann ein praktisch quaderförmiges Gehäuse 2 aufweisen, in welchem ein Garraum 3 für die zuzubereitenden Speisen vorhanden ist. Eine der Wände des Gehäuses 2, im dargestellten Beispiel ist dies die Vorderwand desselben, ist als eine Tür ausgeführt, welche an den Grundkörper des Gehäuses 2 in einer an sich bekannten Weise, beispielsweise mit Hilfe von Scharnieren, angeschlossen ist. Da der Vertikalschnitt in Fig. 1 etwa in der Mitte der Tiefe des Grundkörpers des Gehäuses 2 verläuft, sind die vor der Schnittebene vorhandene Tür sowie die erwähnten Scharniere in Fig. 1 nicht dargestellt.

Der Grundkörper des Gehäuses 2 umfasst zwei Seitenwände 4 und 5, eine Deckwand 6, einen Boden 7 sowie eine Hinterwand 8. Diese feststehenden Wände 4 bis 8 des Gehäuses 2 sowie die Tür weisen eine äussere Hülle 11 und eine innere Hülle 12 auf, welche beispielsweise aus einem schlagfesten Material, vorteilhaft aus Metall, sind. Zwischen diesen Hüllen 11 und 12 befindet sich wärmeisolierendes Material 13 einer an sich bekannten Art.

Die Tür ermöglicht die Be- und Entladung des Garraumes 3 mit Speisen. Die Tür ist in einer an sich bekannten Weise so ausgeführt, dass der Garraum 3 sich wasserdicht verschliessen lässt. Dazu kann beispielsweise ein in sich geschlossener Streifen (nicht dargestellt) aus einem nachgiebigen Material, beispielsweise aus Gummi, verwendet werden, welcher sich zwischen den Stirnkanten der Ofenwände 4 bis 7 und der Innenseite der Tür befindet. Dieser Materialstreifen umgibt die mit der Tür zu verschliessende Oeffnung im Grundkörper des Gehäuses 2, welche durch die genannten Ofenwände 4 bis 7 seitlich begrenzt ist. Der Materialstreifen kann entweder an der Tür oder am Grundkörper des Gehäuses 2 befestigt sein. Ferner ist eine Verschlussvorrichtung (nicht dargestellt) für die Tür vorgesehen, welche einer an sich bekannten und in Flugzeugen zugelassenen Art sein kann.

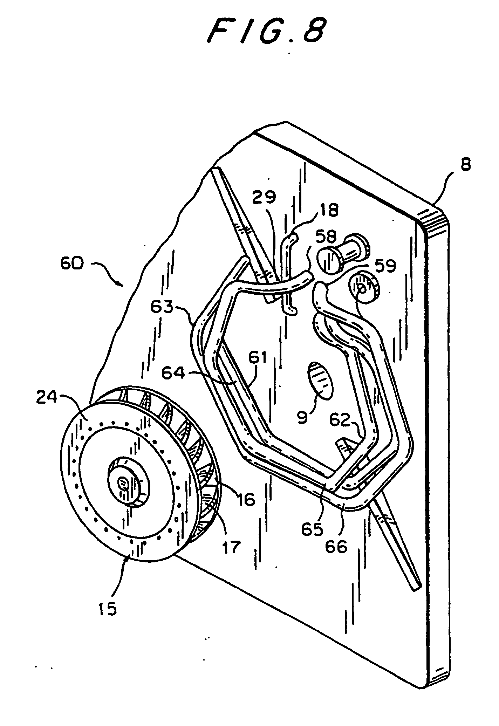

Die Einrichtung weist einen Ventilator 15 auf (Fig. 1 und 8), dessen Betrieb durch eine Steuervorrichtung (nicht dargestellt) dieser Einrichtung steuerbar ist. Die Steuervorrichtung ist vorteilhaft an der Aussenseite der Gehäusehinterwand 8 angebracht. Sie kann jedoch auch ausserhalb des Ofens angeordnet sein. Der Ventilator 15 ist als ein Turbinenrad ausgeführt, welches auf der Welle 14 eines Antriebsmotors (nicht dargestellt) befestigt ist. Das Turbinenrad 15 befindet sich im Garraum 3, während der Motor ausserhalb des Garraumes 3 angeordnet ist. Im dargestellten Fall ist der Ventilator 15 der Hinterwand 8 des Ofens 1 zugeordnet. In diesem Fall geht die Welle 14 durch eine Oeffnung 9 (Fig. 8) in der Hinterwand 8 hindurch und die Welle 14 ist in der Oeffnung 9 dieser Wand 8 wasser- bzw. dampfdicht gelagert. Der Motor ist an der Aussenseite der Rückwand 8 angebracht. Die Welle kann jedoch auch durch eine andere Wand des Gehäuses 2 hindurchgehen, wie z.B. durch die Deckwand 6 desselben. Das Turbinenrad 15 ist möglichst nahe an der Ofenwand angeordnet.

Das Turbinenrad 15 weist eine Scheibe 16 auf, welche auf der Antriebswelle 14 des Motors zentral befestigt ist. Diese Scheibe 16 kann in der Ofenwand 8 eingelassen sein. Die dem Inneren des Garraumes 3 zugewandte Oberfläche der Scheibe 16 ist mit Schaufeln 17 versehen, welche von der Scheibe 16 axial abstehen und von der Mitte der Scheibe 16 gegen ihren Rand hin bogenförmig verlaufen. Die von der Scheibe 16 axial entfernt liegenden Ränder der Schaufeln 17 sind mit Hilfe eines Ringes 24 untereinander verbunden. (Fig. 8)

Der Ventilator 15 dient unter anderem auch zur Umwälzung von Luft und Dampf (Fluid) im Garraum 3. Diese Umwälzung ermöglicht unter anderem, dass die Temperatur im Garraum 3 während der Zubereitung von Speisen überall praktisch gleich ist und dass der Wärmeaustausch zwischen dem Fluid und den Speisen im Garraum 3 intensiv vor sich geht.

Im Inneren 3 des Gehäuses 2 befindet sich zumindest eine Heizvorrichtung 10 bzw. 60, welche mit dem Ventilator 15 zusammenarbeitet. Die Heizvorrichtung 10 bzw. 60 ist an der Innenseite einer der feststehenden Wände 4 bis 8 des Grundkörpers des Gehäuses 2 angeordnet. Im dargestellten Fall ist die Heizvorrichtung 10 bzw. 60 der Innenseite der Gehäuse-Hinterwand 8 zugeordnet. Die Heizvorrichtung 10 bzw. 60 ist in einer an sich bekannten Weise an eine entsprechende Energiequelle über die Steuervorrichtung anschliessbar und sie ist zweckmässigerweise als eine elektrische Heizvorrichtung ausgeführt.

Die in Fig. 1 dargestellte Heizvorrichtung 10 hat im wesentlichen die Form eines offenen Ringes, welcher den Ventilator 15 in seiner Umfangsrichtung fast vollständig umgibt. Die Oeffnung bzw. der Unterbruch im Ring bzw. in der Heizvorrichtung 10 bzw. 60 befindet sich im oberen Bereich bzw. im Scheitelbereich dieser, sodass hier ein Spalt 29 in der Heizvorrichtung 10 bzw. 60 vorhanden ist. Dieser Spalt ist durch die Endpartien der Heizvorrichtung 10 bzw. 60 seitlich begrenzt. Im Bereich der Enden des offenen Ringes 10 befinden sich Tüllen 58 und 59, durch welche die Heizvorrichtung 10 zw. 60 an die Energiequelle angeschlossen ist.

Parallel zur Längsrichtung der Welle 14 betrachtet, weist die Heizvorrichtung 10 bzw. 60 eine Abmessung bzw. eine Tiefe auf, welche mit der Tiefe des Ventilators 15, d.h. mit dem Abstand zwischen der Scheibe 16 und dem Ring 24 des Turbinenrades 15, vergleichbar ist. Folglich ist der Ventilator 15 von der Heizvorrichtung 10 bzw. 60 nicht nur entlang seinem Umfang sondern auch entlang seiner Tiefe bzw. Breite umgeben. Dies bietet den Vorteil, dass Wassertröpfchen, welche von der Umfangspartie des sich drehenden Ventilators 15 weggeschleudert werden, auf eine verhältnismässig grosse Oberfläche der Heizvorrichtung 10 gelangen und somit praktisch augenblicklich in Dampf umgewandelt werden.

Fig. 8 zeigt perspektivisch eine konkrete Ausführung der Heizvorrichtung. Diese Heizvorrichtung 60 umfasst drei Heizkörper 61, 62 und 63, von welchen jeder praktisch die Form eines offenen Fünfeckes aufweist. Im Bereich der Endpartien des jeweiligen Heizkörpers 61 bzw. 62 bzw. 63 befindet sich je eine der bereits erwähnten Tüllen 58 und 59, durch welche der jeweilige Heizkörper 61 bzw. 62 bzw. 63 an die Energiequelle angeschlossen ist. Die Endpartien der Heizkörper 61 bis 63 verlaufen praktisch senkrecht zur Hinterwand 8 des Ofenghäuses 2. Der jeweilige Heizkörper 61 bzw. 62 bzw. 63 weist auch einen Mittelteil 64 bzw. 65 bzw. 66 auf, welcher sich zwischen seinen Endpartien 58 und 59 erstreckt und welcher praktisch parallel zur Wand 8 verläuft bzw. liegt, an welcher der Heizkörper 61 bis 63 angebracht ist.

Die Endpartien der einzelnen Heizkörper 61 bis 63 sind unterschiedlich lang ausgeführt, sodass die Mittelteile 64, 65 und 66 der Heizkörper 61 bis 63 in unterschiedlichen Abständen von der Wand 8 angeordnet sind. Die Längen der Endpartien sind im dargestellten Fall so gewählt, dass die Mittelpartien 64 bis 66 der Heizkörper 61 bis 63, betrachtet in der Längsrichtung der Welle 14, nebeneinander liegen. Dabei sind die Endpartien des ersten Heizkörpers 61 am kürzesten, sodass die Mittelpartie 64 dieses Hiezkörpers 61 an der Wand 8 am nächsten liegt. Am längsten sind Endpartien des dritten Heizkörpers 63, dessen Mittelpartie 66 von der Wand 8 am meisten entfernt liegt. Dazwischen liegt die Mittelpartie 65 des zweiten Heizkörpers 62. Der Durchmesser der Heizkörper 61 bis 63 ist so gewählt, dass die nebeneinander liegenden Mittelpartien 64 bis 66 der Heizkörper 61 bis 63 praktisch die ganze Breite des Turbinenrades 15 zwischen der Scheibe 16 und dem Ring 24 desselben überdecken bz. umgeben.

Im Garraum 3 befindet sich auch der Fühler 23 eines Thermometers. Dieser Thermofühler 23 ist im dargestellten Beispiel im oberen Bereich des Garraumes 3 angeordnet. Die Ausführleitung des Thermometerfühlers 23 geht im dargestellten Beispiel durch die Deckwand 6 hindurch und sie ist an die Steuervorrichtung ebenfalls angeschlossen.

Zwischen den Hüllen 11 und 12 der Deckwand 6 erstreckt sich der mittlere Abschnitt eines Rohrstückes 18. Ein Ausläufer dieses Rohrstückes 18 befindet sich im Garraum 3 und dieser Ausläufer liegt zwischen den Enden 58 und 59 der Heizvorrichtung 10 bzw. 60. Das Rohrstück 18 setzt sich ausserhalb der Deckwand 6 mit einem freien Abschnitt 19 desselben fort. Das freie Ende dieses Rohrstückabschnittes 19 kann an ein Wasserversorgungsnetz in einer an sich bekannten Weise angeschlossen sein. Im Rohrstück 18 sind Ventile 25 und 26 untergebracht, deren Arbeitsweise durch die bereits erwähnte Steuervorrichtung steuerbar ist. Die Drosselventile 25 und 26 können einer an sich bekannten Art sein. Die Grösse des lichten Querschnittes des Rohrstückes 18 wird mit Hilfe der Drosselventile 25 und 26 geändert.

Das Rohrstück 18 kann derart angeordnet sein, dass die im Inneren des Garraumes 3 liegende Mündung desselben gegen einen der Bestandteile des Ofens 1 gerichtet ist, welcher aus dem zugeführten Wasser Nebel oder/und Dampf bilden kann. Wenn die Rohrstückmündung gegen das Turbinenrad 15 hin gerichtet ist, dann wird Wasser, welches in Form von Strahlen bzw. Einschüssen durch die Zuleitung 18 in den Garraum 3 gelangt, durch das sich drehende Turbinenrad 15 zunächst in Nebel umgewandelt. Dieser Nebel wird durch das Turbinenrad 15 gegen die Heizvorrichtung 10 bzw. 60 geschleudert, wo der Nebel in Dampf umgewandelt wird. Wenn das Rohrstück 18 gegen den Heizkörper 10 bzw. 60 gerichtet ist, dann werden die eingeleiteten Wassereinschüsse direkt in Dampf umgewandelt.

Zwischen den Hüllen 11 und 12 einer der Wände des Gehäuses 2 erstrecken sich zwei weitere Rohrstücke 21 und 22, welche sich einerends in den Garraum 3 und andernends gegen aussen hin öffnen. Im dargestellten Fall befinden sich die Rohrstücke 21 und 22 in einer der vertikalen Seitenwände 5 des Ofengehäuses 2. Diese Rohrstücke 21 und 22 können sich jedoch auch in der Rückwand 8 des Ofengehäuses 2 befinden. Eines dieser Rohrstücke 21 befindet sich oben in der Nähe der Deckwand 6 des Gehäuses 2. Das andere Rohrstück 22 liegt unten im Bereich der Innenhülle 12 des Bodens 7 des Gehäuses 2. Im oben liegenden Rohrstück 21 ist ein Sperrventil 27 angeordnet, dessen Arbeitsweise durch die Steuervorrichtung steuerbar ist. Im unten liegenden Rohrstück 21 ist ein weiteres Sperrventil 28 angeordnet, dessen Arbeitsweise durch die Steuervorrichtung ebenfalls steuerbar ist.

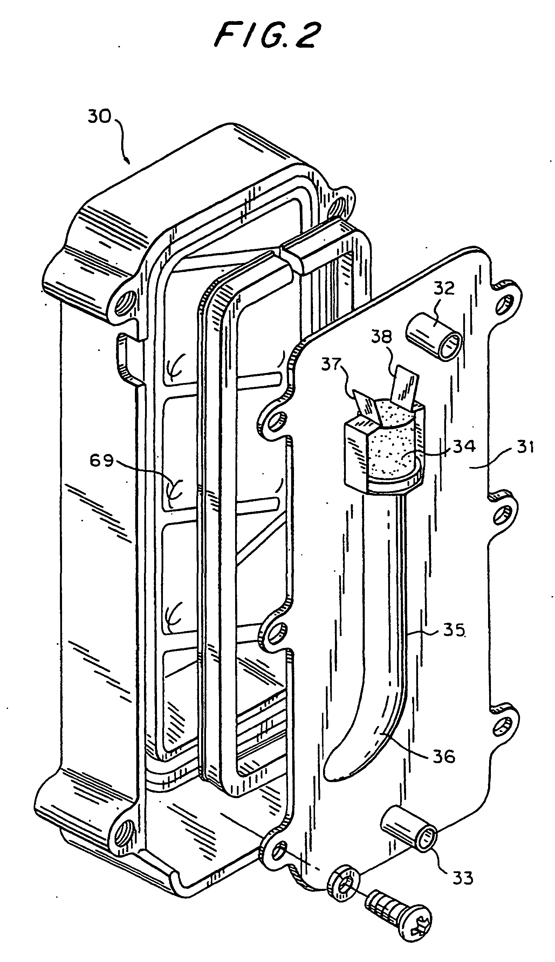

Die vorliegende Einrichtung umfasst auch einen Kondensator 30 für Dampf, welcher im Garraum 3 erzeugt wird. Fig. 2 zeigt diesen Kondensator 30 in einer explosionsartigen Darstellung. Der Kondensator 30 ist im dargestellten Fall der Aussenseite der genannten Seitenwand 5 des Ofengehäuses 2 zugeordnet. Der Kondensator 30 kann jedoch auch der Aussenseite der Rückwand 8 des Gehäuses 2 zugeordnet sein. Im Inneren des Kondensators 30 befinden sich an sich bekannte Mittel 69, welche die Kondensation von Dampf beschleunigen. Als solche Mittel 69 kommen Platten, Rippen usw. in Frage, welche im Inneren des Kondensators 30 in einer geeigneten Weise angeordnet sind. Von der dem Ofen 1 zugewandten Seitenwand 31 des Kondensators 30 stehen Leitungen 32 und 33 ab, welche andernends an die Rohrstücke 21 und 22 im Gehäuse 2 des Ofens 1 dampfdicht angeschlossen sind.

An der Aussenseite der genannten Kondensatorwand 31 ist ein Auspuff 35 angeordnet. Dieser Auspuff 35 weist ein Rohrstück 36 auf, welches an der Aussenseite der Kondensatorwand 31 befestigt ist. Das untere Ende dieses Rohrstückes 36 geht durch die Seitenwand 31 hindurch und es mündet in das Innere des Kondensators 30 im Bereich der unteren Partie des Kondensators 30. Das obere Ende des Auspufrohres 36 ist mit einem schwammartigen Dämmstück 34 versehen, welches die hier vorhandene Mündung des Auspuffrohres 36 zudeckt. Diese Endpartie des Auspuffrohres 36 ist mit zwei einander gegenüberliegenden, federnden Laschen 37 und 38 versehen, welche das Dämmstück 34 gegen die Mündung des Auspuffrohres 36 andrücken und welche ausserdem eine Auswechselung des Dämmstückes 34 erlauben. Anstelle des Dämmstückes 34 kann eine Kühlvorrichtung angeordnet sein, welche nachstehend beschrieben ist.

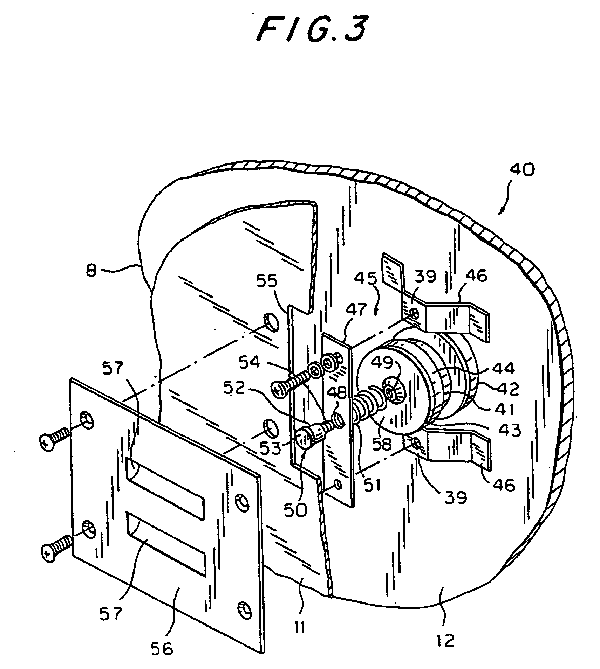

Vorschriftsgemäss muss jeder Behälter, in welchem sich Druck aufbauen lässt, ein Sicherheitsventil haben. In der vorliegenden Einrichtung ist der maximale Wert des Druckes verhältnismässig niedrig. Für so kleine Druckwerte gibt es auf dem Markt keine geeignete Ventilanordnung. In Fig. 3 ist ein Sicherheitsventil 40 der vorliegenden Einrichtung in einer explosionsartigen Darstellung abgebildet. In der Innenhülle 12 einer der Wände des Gehäuses 2, im dargestellten Fall ist dies die Innenhülle 12 der Gehäuserückwand 8, ist eine Oeffnung 41 ausgeführt, welche im dargestellten Fall eine kreisförmige Kontur hat. Dieser Oeffnung 41 ist ein Ventilsitz 42 zugeordnet, welcher sich an der Aussenseite des Hülle 12 befindet und welcher im dargestellten Fall ringförmig ist. Diesem Sitz 42 steht ein Ventilkörper 43 gegenüber, welcher die Form einer Scheibe bzw. eines Topfes mit einer niedrigen Umlaufwand 44 oder ähnlich haben kann. Die Stirnpartie der Umlaufwand 44 bzw. die Randpartie der Scheibe liegen auf dem Ventilsitz 42 dichtend auf, wenn das Ventil 40 geschlossen ist.

Die Ventilanordnung 40 umfasst ferner Mittel 45, welche zur Führung des Ventilkörpers 43 hinsichtlich des Ventilsitzes 42 dienen. Diese Mittel 45 umfassen zwei Distanzglieder 46, welche sich neben dem Ventilsitz 42 befinden und welche hinsichtlich dieses Ventilsitzes 42 einander diametral gegenüberliegen. Der Abstand der von der Hülle 12 abgewandten Stirnflächen 39 der Distanzglieder 46 ist grösser als der Abstand der rückwärtigen Fläche 58 des Ventilkörpers 43 von der Hülle 12. Zu den genannten Mitteln 45 gehört ferner eine Lasche 47, welche so lang ist, dass sie den Abstand zwischen den Distanzgliedern 46 überbrücke kann. Die jeweilige Endpartie dieser Lasche 47 ist auf der Stirnfläche 39 eines der Distanzglieder 46 befestigt. Im mittleren Bereich der Lasche 47 ist eine Oeffnung bzw. Bohrung 48 ausgeführt, welche mit einer Gewindebohrung 49 im mittleren Bereich der Rückwand 58 des Ventilkörpers 43 fluchtet.

Es ist eine Schraube 50 vorgesehen, welche durch die mittlere Oeffnung 48 in der Lasche 47 hindurchgeht und deren Bolzen in der Gewindebohrung 49 im Ventilkörper 43 eingeschraubt ist.

Eine Schraubenfeder 51 umgibt den Gewindebolzen der Schraube 50. Das eine Ende dieser Feder 51 liegt an der Innenseite der Lasche 47 und das andere Ende der Feder 51 liegt an der Rückwand 58 des Ventilkörpers 43 auf. Die Feder 51 drückt somit den Ventilkörper 43 von der Lasche 47 weg und somit gegen den Ventilsitz 42 an.

Der Schraubenkopf 52 weist zwei Abschnitte 53 und 54 auf, welche in der Längsrichtung der Schraube 50 aufeinander folgen. Der erste bzw. äussere Kopfabschnitt 53 hat einen grösseren Durchmesser als der zweite bzw. innere Schraubenabschnitt 54. Der Durchmesser des ersten Kopfabschnittes 53 ist grösser als der Durchmesser der mittigen Oeffnung 48 in der Lasche 47. Folglich kann dieser erste Kopfabschnitt 53 durch die Laschenöffnung 48 nicht hindurchgehen. Dieser Kopfabschnitt 53 befindet sich an der Aussenseite der Lasche 47. Die Umfangspartie dieses ersten Kopfabschnittes 53 kann als ein Sechskant geformt sein.

Der zweite Kopfabschnitt 54 hat eine zylinderförmige Aussenfläche, deren Durchmesser so bemessen ist, dass dieser Kopfabschnitt 54 durch die mittige Oeffnung 48 in der Lasche 47 hindurchgehen kann. Die Länge dieses zweiten Kopfabschnittes 54 ist zumindest so gross wie der Hub des Ventilkörpers 43. Wenn der Druck im Garraum 3 derart ansteigt, dass dessen Grösse die Anpresskraft der Schraubenfeder 51 übertrifft, dann wird der Ventilkörper 43 vom Ventilsitz 42 weggedrückt. Dabei verschiebt sich der zweite Kopfabschnitt 54 in der Laschenöffnung 48 dementsprechend in der Längsrichtung der Schraube 50. Dieser zweite Kopfabschnitt 54 wirkt zusammen mit der Schraubenfeder 51 als eine Führung des Ventilkörpers 43.

Diese Ventilanordnung 40 befindet sich im wesentlichen zwischen den Hüllen 11 und 12 der Gehäusewand. In der Aussenhülle 11 ist eine entsprechende und grössere Oeffnung 55 ausgeführt, welche die Montage- und Wartungsarbeiten der Ventilanordnung 40 in der Gehäusewand ermöglicht. Diese Aussenöffnung 55 ist mit Hilfe eines Deckels 56 verschliessbar, in welchem Schlitze 57 ausgeführt sind. Durch diese Schlitze 57 kann Dampf usw. aus dem Gehäuse 2 entweichen, nachdem das Ventil 40 geöffnet hat. Diese Ventilanordnung 40 kann auch an der Tür des Ofens 1 angebracht sein.

Die Steuervorrichtung ist derart ausgeführt, dass sie die Zusammenarbeit der einzelnen Bestandteile der vorliegenden Einrichtung anhand eines in dieser Steuervorrichtung gespeicherten Programms steuern kann. Die Steuervorrichtung kann ferner auch eine Anordnung zur Ermittlung von Zeitintervallen, d.h. eine Uhr bzw. einen Taktgenerator enthalten.

Am Anfang des Betriebes der vorliegenden Einrichtung sind das Dampfauslassventil 27 und das Wasserauslassventil 28 voll offen. Nachdem die zuzubereitenden Speisen im Garraum 3 untergebracht worden sind und nachdem die Ofentür geschlossen worden ist, veranlasst das in der Steuervorrichtung gespeicherte Programm zunächst die Messung der Temperatur durch den Temperaturfühler 23 im Garraum 3. Die Temperatur liegt in diesem Zeitpunkt meistens bei etwa 5 Grad Celsius, und zwar wegen den in den Garraum 3 eingebrachten Speisen, welche meistens tiefgefroren sind.

Nachdem die Temperatur im Garraum 3 ermittelt worden ist, beginnt ein erster Abschnitt T1 des Betriebes des Ofens 1. Gleich am Anfang dieses Betriebsabschnittes T1 beginnt das Turbinenrad 15 zu drehen. Die Heizvorrichtung 10 bzw. 60 wird durch die Steuervorrichtung an eine Energiequelle angeschlossen, sodass die Temperatur im Garraum 3 beginnt zu steigen. Dies geschieht so lange, bis ein vorgegebener, oberer Temperaturwert von beispielsweise bis zu 85 Grad Celsius durch den Temperaturfühler 23 im Garraum 3 angezeigt wird. Nachdem der obere Temperaturwert erreicht worden ist, endet der erste Betriebsabschnitt T1 und beginnt ein zweiter Betriebsabschnitt T2. Während diesem zweiten Betriebsabschnitt T2 dreht das Turbinenrad 15 weiter und das Dampfauslassventil 27 sowie das Wasserauslassventil 28 sind weiterhin offen.

Am Anfang des zweiten Betriebsabschnittes T2 beginnt eine schubweise Zufuhr von Wasser in den Garraum 3, und zwar durch das Rohrstück 18 bzw. 19. Diese schubweise Wasserzufuhr wird durch die im Rohrstück 18 bzw. 19 aufeinander folgenden Drosselventile 25 und 26 gesteuert, wobei diese Ventile 25 und 26 durch die Steuervorrichtung abwechselnd angesteuert werden. Dies bedeutet, dass eines der Ventile 25 bzw. 26 die Menge von zugeführtem Wasser steuert, während das andere Ventil voll offen ist. Dies kann so während einer vorgegebenen ersten Zeitspanne Z1 ablaufen, wobei diese erste Zeitspanne Z1 beispielsweise 1 Minute dauert. Während einer darauf folgenden, zweiten Zeitspanne Z2, welche mit der darauf folgenden Minute zusammenfallen kann, werden die Rollen der Ventile 25 und 26 durch die Steuervorrichtung vertauscht, sodass jenes Ventil, welches voll offen war, jetzt die Wasserzufuhr steuert. Das andere Ventil ist während dieser zweiten Zeitspanne Z2 voll offen.

Der wechselweise Einsatz der Ventile 25 und 26 während der Zeitspannen Z1 und Z2 erfolgt aus Sicherheitsgründen. Denn wenn man nur eines der Ventile 25 oder 26 benützen würde und wenn dieses Ventil nicht schliessen sollte, dann würde sich der Garraum 3 mit Wasser füllen. Dieses Wasser könnte dann aus dem Garraum 3 ausfliessen und Wasserschaden in der Umgebung des Ofens anrichten, nachdem die Tür des Garraumes 3 geöffnet worden ist. Wenn man dagegen zwei Ventile 25 und 26 in der beschriebenen Weise verwendet, dann unterbricht das ordentlich funktionierende Ventil die Wasserzufuhr.

Die Steuerung der Menge des in den Garraum 3 eingeführten Wassers erfolgt durch aufeinander folgendes Oeffnen und Schliessen des die Wasserzufuhr jeweils steuernden Ventils 25 bzw. 26. Das steuernde Ventil wird durch die Steuervorrichtung nach Ablauf einer vorgegebenen Wartezeit W während eines kurzen Zeitfensters F geöffnet. Das Ventil kann beispielsweise nach Ablauf einer Wartezeit W von 3 bis 10 Sekunden währen eines Zeitfensters F von 50 Millisekunden geöffnet bleiben. Dies verursacht Wassereinschüsse in den Garraum 3, welche während eines Zeitfensters F von beispielsweise 50 Millisekunden dauern, wobei zwischen zwei aufeinander folgenden Wassereinschüssen eine Wartezeit W von 3 bis 10 Millisekunden liegt.

Die Temperatur im Garraum 3 wird während des zweiten Betriebsabschnittes T2 auf einem vorgegebenen Wert durch wechselweises Ein- und Ausschalten des Heizkörpers 10 bzw. 60 gehalten. Der Ventilator 15 sorgt dafür, dass das Fluid im Garraum 3 zirkuliert und gleichmässig verteilt wird, sodass die Wärmeenergie den Speisen intensiv zugeführt wird. Die Temperatur im Garraum 3 liegt während diesem Betriebsabschnitt T2 oberhalb von 85 Grad Celsius. Deswegen verdampft die jeweils eingespritzte Wassermenge sofort. Dadurch wird die Feuchtigkeit im Garraum 3 erhöht. Je höher die Feuchtigkeit im Garraum 3 ist, um so intensiver erfolgt die Uebertragung der Wärmenergie vom Fluid zu den Speisen. Nachdem der Dampf im Garraum zum Sattdampf wurde, beendet die Steuervorrichtung die Wassereinschüsse durch Schliessen der Drosselventile 25 und 26 im Rohrstück 18 bzw. 19.

Dieser zweite Arbeits- bzw. Betriebsabschnitt T2 endet, wenn der Ueberdruck im Garraum 3, welcher durch die Entwicklung des Dampfes an der Heizvorrichtung 10 bzw. 60 verursacht wurde, durch Kondensation des Dampfes im Kondensator 30 abgebaut worden ist. Die Länge dieses zweiten Betriebsabschnittes T2 ist vor allem durch die Menge von Gargut im Garraum 3 sowie durch die Temperatur des Garguts bestimmt, als dieses in den Garraum 3 eingefüllt worden ist. Diese Umstände können bei der Bestimmung der Länge dieses zweiten Betriebsabschnittes T2 durch die Steuervorrichtung berücksichtigt werden. Folglich benötigt man im vorliegenden Verfahren keine Messung des Druckes im Garraum 3.

Nach Ablauf des zweiten Betriebsabschnittes T2 werden die Ventile 27 und 28 in den zum Kondensator 30 führenden Leitungen 32 und 33 geschlossen und sie bleiben während einem dritten Betriebsabschnitt T3 geschlossen. Während diesem dritten Betriebsabschnitt T3 kondensiert Sattdampf im Garraum 3 wegen der Abgabe seiner Energie an die im Garraum 3 vorhandene Ware, bis die Temperatur des Dampfes hier zusammenfällt. Nachdem die Temperatur im Garraum 3 so weit abgesunkent ist, dass der Dampf im Garraum 3 kein gesättigter Dampf mehr ist, wird das Dampfauslassventil 27 in der oberen Zuleitung 32 zum Kondensator 30 geöffnet, womit ein vierter Betriebsabschnitt T4 beginnt. Das Fluid strömt nun durch diese Auslassleitung 32 in den Kondensator 30, wo der Dampfanteil des Fluids zu Wasser kondensiert. Der Luftanteil des Fluids entweicht aus dem Kondensator 30 durch den Auspuff 35. Dadurch endet ein erster Arbeitszyklus der vorliegenden Einrichtung.

Am Anfang eines weiteren Arbeitszyklus beginnt erneut die Zufuhr bzw. Einspritzung von Wasser in den Garraum 3 durch das Rohrstück 18 bzw. 19, und zwar etwa so, wie dies vorstehend im Zusammenhang mit dem zweiten Betriebsabschnitt T2 beschrieben ist. Die Steuervorrichtung veranlasst eine Fortsetzung der Wasserzufuhr in Form von Wassereinschüssen, bis der Dampf im Garraum 3 wiederum zum gesättigten Dampf wird. Auf diesen zweiten Betriebsabschnitt T2 folgen die vorstehend ebenfalls bereits beschriebenen Betriebsabschnitte T3 und T4.

Solche Arbeitszyklen, welche aus den vorstehend beschriebenen Betriebsabschnitten T2 bis T4 zusammengesetzt sind, werden wiederholt, bis die Speisen zubereitet sind.

Während dem letzten Abschnitt des vorliegenden Verfahrens, welcher beispielsweise 30 Sekunden dauern kann, wird kein Wasser mehr in den Garraum 3 eingespritzt. Danach wird der Dampfauslassventil 27 in der oberen Leitung 32 geöffnet, sodass Dampf aus dem Garraum 3 im Kondensator 30 zu Wasser kondensiert. Der Kondensator 30 kann auch als eine Auffangvorrichtung für das Kondenswasser betrachtet werden.

Beim Oeffnen der Ofentür wird das Dampfauslassventil 27 und das Wasserauslassventil 28 geöffnet. Folglich kann das im Kondensator 30 angesammelte Kondenswasser durch die untere Verbindungsleitung 33 zum Boden 7 des Ofens 1 fliessen, wo es wegen der dort vorhandenen Restwärme in Dampf umgewandelt wird. Dieser Dampf entweicht beim Oeffnen der Ofentür durch die Türöffnung aus dem Garraum 3 ins Freie. Da es sich bei diesem Kondeswasser jedoch nur um kleine Mengen von Wasser bzw. Dampf handelt, stellt das Entweichen dieses Dampfes ins Freie kein Problem dar. Wichtig ist, dass sich keine Wasserlachen in diesem Verfahren auf dem Boden 7 des Garraumes 3 bilden können.

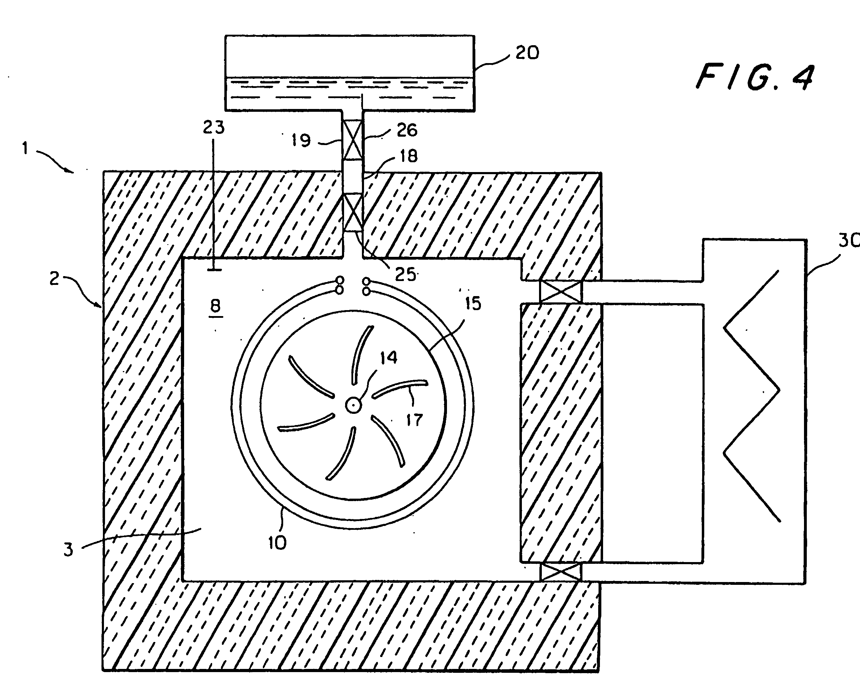

Fig. 4 zeigt eine weitere Ausführungsmöglichkeit der vorliegenden Einrichtung. Diese Einrichtung weist anstelle eines Anschlusses an eine Wasserleitung einen Behälter 20 für die Aufnahme von Wasser auf. Dieser Behälter 20 ist oberhalb des Ofens 1 angeordnet. An den Boden des Behälters 20 ist das Leitungsstück 19 einerends angeschlossen. Das andere Ende dieses Leitungsstückes 19 ist an das äussere Ende des Rohrstückes 18 angeschlossen, sodass Wasser aus dem Behälter 20, verursacht durch eigenes Gewicht, in den Garraum 3 fliesen kann, wenn die Drosselventile 25 und 26 durchgängig sind. Der Behälter 20 kann als ein wegnehmbarer Behälter ausgeführt sein. Ein solcher Behälter 20 kann ausserhalb des Aufstellbereiches des Ofens 1 mit Wasser gefüllt werden. Ein so ausgeführter Ofen 1 kann vom Wasserversorgungsnetz am Bord beispielsweise eines Flugzeugs unabhängig betrieben werden.

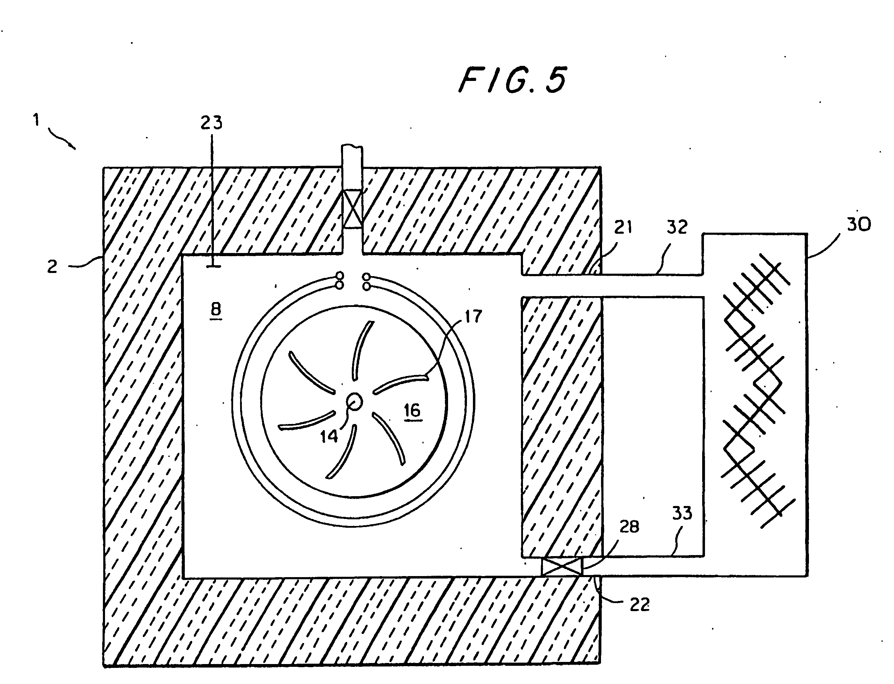

Fig. 5 zeigt eine noch weitere Ausführungsform der vorliegenden Einrichtung, bei welcher das Dampfauslassventil im Dampfzuführrohr 21 zum Kondensator 30 wegfällt. Bei dieser Einrichtung muss dafür der innere Strömungswiderstand im Kondensator 30 verhältnismässig hoch sein, damit das Fluid aus dem Garraum 3 in den Kondensator 30 nicht leicht entweichen kann. Diese besondere Ausführung des Kondensators 30 ist mit einem anderen Symbol angedeutet, welches für den inneren Aufbau des Kondensators 30 in Fig. 5 verwendet ist.

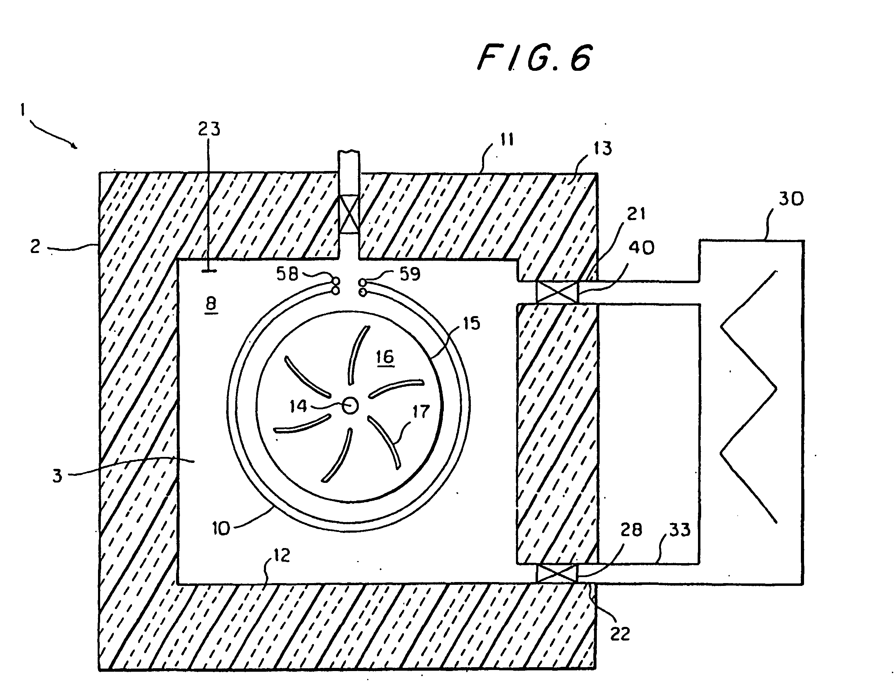

Die in Fig. 6 dargestellte Ausführung der vorliegenden Einrichtung unterscheidet sich von den vorstehend beschriebenen Ausführungen vor allem darin, dass das Dampfzuführungsrohr 32 weggefallen ist. Der Kondensator 30 ist an das Gehäuse 2 des Offens 1 daher nur über das vorstehend beschriebene Wasserabführrohr 33 angeschlossen. Im unteren Rohrstück 22 ist das steuerbare Ventil 28 in vorstehend beschriebenen Art angeordnet. Im oberen Rohrstück 21 ist das vorstehend beschriebene Sicherheitsventil 40 untergebracht.

In dieser Einrichtung lassen sich die vorstehend beschriebenen Zyklen des vorliegenden Verfahrens ebenfalls durchführen, weil sich der Kondensator 30 durch Schliessen des unteren Ventils 28 vom Offen 1 ebenfalls luftdicht trennen lässt. Ferner ist es in der Tat ohne wesentliche Bedeutung, dass der Dampf zu seiner Kondensation durch das untere Rohrstück 33 in den Kondensator 30 strömen muss. In dieser Hinsicht ist nur der Unterschied zwischen dem Druck im Garraum 3 und dem Druck im Kondensator 30 massgebend.

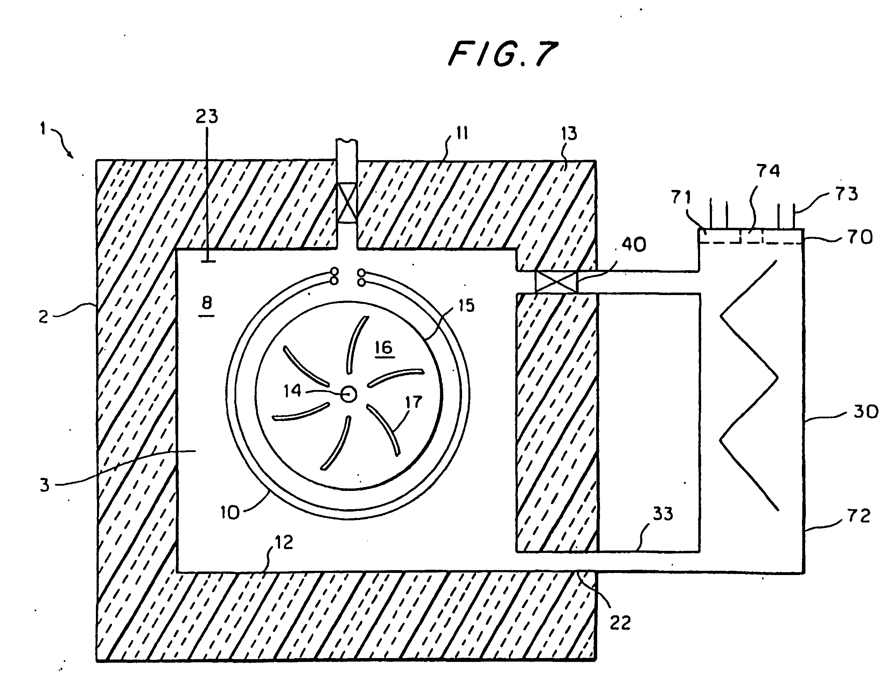

Fig. 7 zeigt eine noch weitere Ausführungsform der vorliegenden Einrichtung, welche von der im Zusammenhang mit Fig. 6 dargelegten Ausführung ausgeht und bei welcher sogar das Ventil 28 im unteren Rohrstück 22 wegfällt. Bei dieser Einrichtung muss der Querschnitt des Rohrstückes 22 oder/und der Leitung 33 alledings kleiner sein als bei den vorstehenden Ausführungen der vorliegenden Einrichtung. Dies deswegen, um eine Ueberlastung des Kondensators 30 durch Zufuhr einer zu grossen Menge von Dampf zu schützen. Grundsätzlich gilt, dass je grösser das Volumen des Garraumes 3 ist, um so kleiner muss der Querschnitt der Rohre 22 bzw. 33 sein.

Zur Beschleunigung der Kondensation von Wasserdampf im Kondensator 30, kann sich im Oberteil des Kondensatorgehäuses eine Kühlvorrichtung 70 befinden. Diese Kühlvorrichtung 70 ist im dargestellen Fall als eine Batterie aus Elementen zusammengesetzt, welche Kälte erzeugen können. Dazu können sogenannte Peltier-Elemente verwendet werden, welche die Oberwand 71 des Kondensatorgehäuses bilden. Bekanntlich erzeugen Peltier-Elemente an einem ihrer Enden Wärme und am anderen Ende Kälte. In der Batterie sind die Peltier-Elemente so angeordent, dass ihre "kalten" Enden im Inneren des Kondensators 30 liegen. An diesen "kalten" Ende kondensiert Dampf schneller zu Wasser als wenn es keine Kühlbatterie gibt.

Die "heissen" Enden der Peltier-Elemente liegen an der Aussenseite der Decke 71 des Kondensatorgehäuses 72. Zur Unterstützung der Abstrahlung von Wärme aus den aussen liegenden Enden der Peltier-Elemente können Kühlrippen 73 diesen Enden der Peltier-Elemente 71 zugeordnet sein. In der Deckwand 71 dieses Kondensators 30 ist eine Oeffnung 74 ausgeführt, durch welche Luft entweichen kann.

## Patentansprüche

1. Verfahren zur Zubereitung von Speisen in einem Garraum unter Anwendung von Wasserdampf, **dadurch gekennzeichnet, dass** die Zubereitung der Speisen in zumindest einem Zyklus erfolgt, dass dieser Zyklus einen Betriebsabschnitt (T2) umfasst, während welchem Wasser in den Garraum (3) dosiert eingeführt wird, dass diese Wassereinschüsse im Garraum (3) in Sattdampf umgewandelt werden, so dass Sattdampf als Quelle der Energie zur Zubereitung von Speisen verwendet wird **gekennzeichnet durch** die weiteren Schritte, dass der Zyklus einen weiteren Betriebsabschnitt (T3) umfasst, während welchem die Wassereinschüsse ausbleiben und während welchem der im Garraum (3) vorhandene Sattdampf seine Wärmeenergie an die Speisen abgibt, und dass der Zyklus ferner einen noch weiteren Betriebsabschnitt (T4) umfasst, während welchem Dampf, dessen Temperatur während dem vorangegangenen Betriebsabschnitt (T3) so tief gesunken ist, dass dieser kein Sattdampf mehr ist, so rasch wie möglich abgekühlt wird, damit eine weitere Menge von Sattdampf so bald wie möglich hergestellt werden kann.

2. Verfahren nach Patentanspruch 1, **dadurch gekennzeichnet, dass** das schubweise eingeschossene Wasser zuerst auf den sich drehenden Ventilator (15) trifft und dass dieses Wasser dann als Tropfen vom sich drehenden Ventilator (15) auf die Heizvorrichtung (10;60) geschleudert wird.

3. Verfahren nach Patenanspruch 1, **dadurch gekennzeichnet, dass** dem Zyklus ein Betriebsabschnitt (T1) vorangeht, während welchem die Temperatur im Garraum (3) bis zu einem vorgegebenen Wert, von beispielsweise 85 Grad Celsius, erhöht wird.

4. Einrichtung zur Durchführung des Verfahrens nach Patentanspruch 1, mit einem Ofen (1) zur Aufnahme der zuzubereitenden Speisen, welcher einen Raum (3) zum Garen von Speisen aufweist, wobei sich eine Wasserquelle ausserhalb des Garraums (3) befindet, **dadurch gekennzeichnet, dass** diese Wasserquelle in den Garraum (3) mündet, dass sich eine Heizvorrichtung (10;60) im Innern dieses Garraums (3) befindet und dass die Mündung der Wasserquelle gegen die Heizvorrichtung (10;60) hin gerichtet ist.

5. Einrichtung nach Patentanspruch 4, **dadurch gekennzeichnet, dass** die Wasserquelle einen Kanal (18,19) umfasst, welcher durch die Wand des Garraums (3) hindurchgeht und dass eine Vorrichtung zur dosierten Zuführung von Wasser in den Garraum (3) in diesem Kanal (18, 19) untergebracht ist.

6. Einrichtung nach Patentanspruch 5, **dadurch gekennzeichnet, dass** die Dosiervorrichtung zumindest ein Ventil (25;26) aufweist, welches im Kanal (18,19) angeordnet ist und welches zur Steuerung der Zufuhr von Wasser in den Garraum (3) ausgebildet ist.

7. Einrichtung nach Patentanspruch 5, **dadurch gekennzeichnet, dass** die externe Wasserquelle ein Wassertank (20) ist und dass dieser Wassertank (20) oberhalb des Garraums (3) angeordnet ist.

8. Einrichtung nach Patentanspruch 4, **dadurch gekennzeichnet, dass** die Heizvorrichtung (10;60) rohrförmige Heizkörper (61,62,63) umfasst, dass diese Heizkörper (61,62,63) einen offenen Ring bilden und dass die ringförmige Heizvorrichtung (10;60) den Ventilator (15) umgibt.

9. Einrichtung nach Patentanspruch 4, **dadurch gekennzeichnet, dass** ein Dampfkondensator (30) vorgesehen ist, dass dieser Dampfkondensator am Ofen (1) angebracht ist, dass der Dampfkondensator (30) über zumindest eine Leitung (33) an den Garraum (3) angeschlossen ist und dass sich diese Leitung (33) im unteren Bereich des Garraums (3) und des Dampfkondensators (30) befindet.

10. Einrichtung nach Patentanspruch 9, **dadurch gekennzeichnet, dass** der Dampfkondensator (30) noch über eine zweite Leitung (32) an den Garraum (3) angeschlossen ist und dass sich ein steuerbares Ventil (28) zumindest in der ersten Leitung (33) befindet.

11. Einrichtung nach Patentanspruch 9, **dadurch gekennzeichnet, dass** der Dampfkondensator (30) mit einer zusätzlichen Kühlvorrichtung (70) versehen ist, welche Peltier-Elemente enthalten kann.

## Claims

1. Method for preparing meals in a cooking space using steam, **characterized in that** the preparation of the meals takes place in at least one cycle, **in that** this cycle comprises an operating phase (T2) during which water is introduced into the cooking space (3) in a dosed manner, **in that** these injections of water are converted in the cooking space (3) into saturated steam, so that saturated steam is used as the source of the energy for preparing meals, **characterized by** the further steps that the cycle comprises a further operating phase (T3), during which the injections of water are discontinued and during which the saturated steam present in the cooking space (3) gives off its thermal energy to the meals, and that the cycle also comprises yet a further operating phase (T4), during which steam of a temperature which has fallen so far during the preceding operating phase (T3) that it is no longer saturated steam is cooled as rapidly as possible, in order that a further amount of saturated steam can be produced as early as possible.

2. Method according to Patent Claim 1, **characterized in that** the water injected in pulses first meets the rotating fan (15) and **in that** this water is then propelled as drops from the rotating fan (15) onto the heating device (10; 60).

3. Method according to Patent Claim 1, **characterized in that** the cycle is preceded by an operating phase (T1) during which the temperature in the cooking space (3) is increased up to a predetermined value, of for example 85 degrees Celsius.

4. Device for carrying out the method according to Patent Claim 1, with an oven (1) for receiving the meals to be prepared, which has a space (3) for cooking meals, with a water source being located outside the cooking space (3), **characterized in that** this water source opens out into the cooking space (3), **in that** a heating device (10; 60) is located in the interior of this cooking space (3) and **in that** the outlet of the water source is directed towards the heating device (10; 60).

5. Device according to Patent Claim 4, **characterized in that** the water source comprises a duct (18, 19), which passes through the wall of the cooking space (3), and **in that** a device for the dosed feeding of water into the cooking space (3) is accommodated in this duct (18, 19).

6. Device according to Patent Claim 5, **characterized in that** the dosing device has at least one valve (25; 26), which is arranged in the duct (18, 19) and which is designed for controlling the supply of water into the cooking space (3).

7. Device according to Patent Claim 5, **characterized in that** the external water source is a water tank (20) and **in that** this water tank (20) is arranged above the cooking space (3).

8. Device according to Patent Claim 4, **characterized in that** the heating device (10; 60) comprises tubular heating elements (61, 62, 63), **in that** these heating elements (61, 62, 63) form an open ring and **in that** the annular heating device (10; 60) surrounds the fan (15).

9. Device according to Patent Claim 4, **characterized in that** a steam condenser (30) is provided, **in that** this steam condenser is fitted on the oven (1), **in that** the steam condenser (30) is connected to the cooking space (3) via at least one line (33) and **in that** this line (33) is located in the lower region of the cooking space (3) and of the steam condenser (30).

10. Device according to Patent Claim 9, **characterized in that** the steam condenser (30) is also connected to the cooking space (3) via a second line (32) and **in that** there is a controllable valve (28) located at least in the first line (33).

11. Device according to Patent Claim 9, **characterized in that** the steam condenser (30) is provided with an additional cooling device (70), which may include Peltier elements.

## Revendications

1. Procédé de préparation d'aliments dans une chambre de cuisson par recours à de la vapeur d'eau, **caractérisé en ce que** la préparation des aliments s'effectue en au moins un cycle, **en ce que** ce cycle comprend une phase (T2) pendant laquelle de l'eau est injectée de manière dosée dans la chambre de cuisson (3), **en ce que** ces injections d'eau dans la chambre de cuisson (3) sont converties en vapeur saturée de manière à utiliser cette vapeur saturée comme source d'énergie pour la préparation des aliments, **caractérisé par** les étapes supplémentaires qui consistent en ce que le cycle qui contient une autre phase (T3) pendant laquelle les injections d'eau sont interrompues et pendant laquelle la vapeur saturée présente dans la chambre de cuisson (3) délivre son énergie calorifique aux aliments, et en ce que le cycle comprend en outre encore une autre phase (T4) pendant laquelle la vapeur dont la température est descendue suffisamment bas pendant la phase (T3) qui précède pour ne plus être de la vapeur saturée est refroidie aussi rapidement que possible pour pouvoir préparer aussi rapidement que possible une quantité supplémentaire de vapeur saturée.

2. Procédé selon la revendication 1, **caractérisé en ce que** l'eau injectée par portions vient d'abord frapper le ventilateur (15) en rotation et **en ce que** cette eau est ensuite centrifugée en forme de gouttes par le ventilateur (15) en rotation sur le dispositif de chauffage (10; 60).

3. Procédé selon la revendication 1, **caractérisé en ce que** le cycle est précédé par une phase (T1) pendant laquelle la température de la chambre de cuisson (3) est rehaussée jusqu'à une valeur prédéterminée, par exemple de 85 degrés Celsius.

4. Dispositif en vue de la mise en oeuvre du procédé selon la revendication 1, doté d'un four (1) de réception des aliments à préparer et qui présente une chambre (3) pour la cuisson des aliments, une source d'eau étant prévue à l'extérieur de la chambre de cuisson (3), **caractérisé en ce que** cette source d'eau débouche dans la chambre de cuisson (3), **en ce qu'**un dispositif de chauffage (10; 60) est disposé à l'intérieur de cette chambre de cuisson (3) et **en ce que** l'embouchure de la source d'eau est orientée en direction du dispositif de chauffage (10; 60).

5. Dispositif selon la revendication 4, **caractérisé en ce que** la source d'eau comprend un canal (18, 19) qui traverse la paroi de la chambre de cuisson (3) et **en ce qu'**un dispositif d'apport dosé d'eau dans la chambre de cuisson (3) est installé dans ce canal (18, 19).

6. Dispositif selon la revendication 5, **caractérisé en ce que** le dispositif de dosage présente au moins un ventilateur (25; 26) qui est disposé dans le canal (18, 19) et qui est configuré pour commander l'apport d'eau dans la chambre de cuisson (3).

7. Dispositif selon la revendication 5, **caractérisé en ce que** la source extérieure d'eau est une cuve à eau (20) et **en ce que** cette cuve à eau (20) est disposée au-dessus de la chambre de cuisson (3).

8. Dispositif selon la revendication 4, **caractérisé en ce que** le dispositif de chauffage (10; 60) comprend des corps de chauffe (61, 62, 63) de forme tubulaire, **en ce que** ces corps de chauffe (61, 62, 63) forment un anneau ouvert et **en ce que** le dispositif de chauffage (10; 60). de forme annulaire entoure le ventilateur (15).

9. Dispositif selon la revendication 4, **caractérisé en ce qu'**un condenseur de vapeur (30) est prévu, **en ce que** ce condenseur de vapeur est installé dans le four (1) , **en ce que** le condenseur de vapeur (30) est raccordé à la chambre de cuisson (3) par au moins un conduit (33) et **en ce que** ce conduit (33) est placé dans la zone inférieure de la chambre de cuisson (3) et du condenseur de vapeur (30).

10. Dispositif selon la revendication 9, **caractérisé en ce que** le condenseur de vapeur (30) est encore raccordé à la chambre de cuisson (3) par un deuxième conduit (32) et **en ce qu'**une vanne asservie (28) est prévue au moins dans le premier conduit (33).

11. Dispositif selon la revendication 9, **caractérisé en ce que** le condenseur de vapeur (30) est doté d'un dispositif supplémentaire de refroidissement (70) qui peut contenir des éléments Peltier.
